# EUROPÄISCHE PATENTSCHRIFT

(11) **EP 3 045 875 B1**
(45) Veröffentlichungstag und Bekanntmachung des Hinweises auf die Patenterteilung: **15.01.2020**
(21) Anmeldenummer: 15195763.6
(22) Anmeldetag: 23.11.2015
(51) Int. Cl.: G01F 1/58, G01F 15/00, G01F 15/10

(54) **MAGNETISCH-INDUKTIVES DURCHFLUSSMESSGERÄT**
MAGNETIC-INDUCTIVE FLOW MEASURING APPARATUS
DÉBITMÈTRE À INDUCTION MAGNÉTIQUE

(30) Priorität: 14.01.2015 DE 102015000110; 01.10.2015 DE 102015116679
(43) Veröffentlichungstag der Anmeldung: 20.07.2016
(73) Patentinhaber: Krohne AG, 4019 Basel (CH)
(72) Erfinder: Beerling, Freek, 4826 HK Breda (NL); Heijnsdijk, Alexander Marnix, 3356 BW Papendrecht (NL); Neven, Josef, 26540 Mours St. Eusebe (FR); Nicolas, Christian, 26300 Chatuzange le Goubet (FR)
(74) Vertreter: Gesthuysen Patent- und Rechtsanwälte

(56) Entgegenhaltungen:
- DE-A1-102012 111 757
- US-A- 4 195 515
- US-A- 5 325 728
- US-A1- 2010 313 675

## Beschreibung

Die Erfindung betrifft ein magnetisch-induktives Durchflussmessgerät zur Durchflussmessung eines strömenden Mediums, mit einer Messleitung, mit einer Magnetfelderzeugungseinrichtung zur Erzeugung eines die Messleitung wenigstens teilweise durchsetzenden Magnetfeldes, mit mindestens einer Messelektrode zum Abgreifen einer in dem strömenden Medium induzierten Messspannung, wobei die Messleitung einen mittleren, die Messelektrode aufweisenden, zumindest einseitig abgeflachten Messabschnitt mit einer ebenen Messleitungsteilfläche, nachfolgend immer Teilfläche, aufweist, wobei zu der Magnetfelderzeugungseinrichtung mindestens ein Spulenkern und ein Polschuh gehören und wobei auf der Teilfläche mehrere Abstützrippen realisiert sind.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die meistens mindestens eine Magnetfeldspule, einen Spulenkern sowie einen Polschuh aufweist, meistens ein während des Messvorgangs sich zeitlich veränderndes Magnetfeld erzeugt wird und das Magnetfeld wenigstens teilweise das durch die Messleitung strömende elektrisch leitfähige Medium durchsetzt. Dabei weist das Magnetfeld wenigstens eine Komponente senkrecht zur Längsachse der Messleitung bzw. senkrecht zur Strömungsrichtung des Mediums auf.

Zu dem in Rede stehenden magnetisch-induktiven Durchflussmessgerät gehört mindestens eine die in dem elektrisch leitenden Medium induzierte Messspannung abgreifende Messelektrode. Oft sind zwei Messelektroden vorhanden. Vorzugsweise berühren diese Messelektroden das Medium und verläuft die virtuelle Verbindungslinie der beiden Messelektroden zumindest im Wesentlichen senkrecht zur Richtung des die Messleitung senkrecht zur Längsachse der Messleitung durchsetzenden Magnetfeldes.

Es ist bereits ausgeführt, dass es sich bei den Messelektroden insbesondere um solche handeln kann, die das Medium berühren, also galvanisch mit dem Medium in Kontakt stehend die Messspannung abgreifen. Es gibt aber auch magnetisch-induktive Durchflussmessgeräte, bei denen die Messspannung kapazitiv abgegriffen wird.

Zu den im Stand der Technik bekannten magnetisch-induktiven Durchflussmessgeräten wird beispielhaft verwiesen auf die DE 692 32 633 C2, die DE 199 07 864 A1, die DE 100 64 738 B4, die DE 102 43 748 A1, die DE 102008 005 258 A1 und DE 10 2011 112 703 A1 sowie auch auf die EP 0 704 682 A1 und die EP 0 834 057 A1. Insbesondere wird verwiesen auf die DE 10 2008 057 756 A1, aus der das eingangs beschriebene magnetisch-induktive Durchflussmessgeräte bekannt ist. Bei diesem bekannten magnetisch-induktiven Durchflussmessgerät weist die Messleitung über die Länge einen veränderlichen Querschnitt auf und ist der Querschnitt im mittleren Bereich der Messleitung, einleitend mit Messabschnitt bezeichnet, geringer als am Anfang der Messleitung und am Ende der Messleitung. Dabei ist der Querschnitt der Messleitung in ihrem mittleren Bereich, also im Messabschnitt, rechteckig, gegebenenfalls auch quadratisch. Demgegenüber geht die Erfindung von einem magnetisch-induktiven Durchflussmessgerät aus, bei dem der Messabschnitt der Messleitung funktionsnotwendig mindestens eine ebene Messleitungsteilfläche, einleitend mit Teilfläche bezeichnet, aufweist. Der Messabschnitt kann auch zwei oder mehr ebene Messleitungsteilflächen aufweisen.

Bekannte magnetisch-induktive Durchflussmessgeräte sind häufig dadurch insgesamt "stabile Konstruktionen", dass die Messleitung aus Metall besteht. Bei den Messleitungen handelt es sich in aller Regel um Messrohre, also um zylindrische Hohlkörper mit einem kreisringförmigen Querschnitt. Außerdem gilt für die meisten magnetisch-induktiven Durchflussmessgeräte, dass die Messgerätgehäuse beidseitig aus Metall bestehende Abschluss- und Anschlussflansche aufweisen. Einerseits schließen diese Abschluss- und Anschlussflansche, mit denen die beiden Enden der Messleitung - direkt oder indirekt - verbunden sind, das Durchflussmessgerät ab, darum der Ausdruck "Abschlussflansch". Andererseits dienen die Abschluss- und Anschlussflansehe dem beiderseitigen Anschluss des Durchflussmessgeräts an entsprechende Rohrleitungsflansche, darum der Ausdruck "Anschlussflansch".

Magnetisch-induktive Durchflussmessgeräte müssen erheblichen Anforderungen an die Messgenauigkeit genügen. Dabei ist zu berücksichtigen, dass die in dem strömenden, elektrisch leitfähigen Medium induzierte Messspannung relativ niedrig ist. Das gilt schon für "normale Verhältnisse", worunter eine nicht besonders geringe Strömungsgeschwindigkeit und eine nicht besonders geringe elektrische Leitfähigkeit des strömenden Mediums verstanden werden soll. Bei messtechnisch "erschwerten Voraussetzungen", das heißt bei geringen Strömungsgeschwindigkeiten oder bei geringer elektrischer Leitfähigkeit des strömenden Mediums werden besonders niedrige Messspannungen induziert, - mit der Konsequenz, dass auch - absolut gesehen - relativ niedrige Störspannungen die Messgenauigkeit signifikant beeinflussen.

Daher soll die Magnetfelderzeugungseinrichtung in der Messleitung ein relativ starkes und weitgehend homogenes Magnetfeld erzeugen. Dies geschieht insbesondere dadurch, dass die Messleitung im Messabschnitt nur eine relativ geringe Dicke haben soll.

Bei einer Ausführungsform des aus der DE 10 2008 057 756 A1 bekannten magnetisch-induktiven Durchflussmessgeräts ist die Wandstärke der Messleitung im Messabschnitt geringer als am Anfang und am Ende der Messleitung. Um eine bestimmte Druckbeanspruchbarkeit der Messleitung, auch im Messabschnitt, zu gewährleisten, ist im mittleren Bereich der Messleitung, also im Bereich des Messabschnitts, mindestens eine die Messleitung mit dem Messgerätgehäuse verbindende Verstärkung vorgesehen.

Anstelle einer Messleitung aus Metall kann es angebracht sein, die Messleitung aus einem relativ gering beanspruchbaren - und damit kostengünstigen - Material herzustellen, insbesondere aus relativ preisgünstigem Kunststoff. Ein solcher Werkstoff führt dazu, dass dessen relativ geringe Beanspruchbarkeit entsprechend ausgeglichen werden muss. Andererseits können jedoch auch bei metallischen Messleitungen so hohe Drücke auftreten, dass für die erforderliche Stabilität gesorgt werden muss.

Um das oben angesprochene starke und homogene Magnetfeld zu erzeugen, ist weiterhin vorgesehen, in dem Messabschnitt wenigstens eine abgeflachte und ebene Messleitungsteilfläche, nachfolgend immer Teilfläche, zu erzeugen und den Polschuh der Magnetfelderzeugungseinrichtung unmittelbar und flächig auf der ebenen Teilfläche und damit nahe dem Inneren der Messleitung anzuordnen.

Ein gattungsgemäßes magnetisch-induktives Durchflussmessgerät ist aus der US 2010/0313675 A1 bekannt, wobei eine dünnwandige Messleitung durch Rippen verstärkt wird. Ein Messrohr mit Abstützrippen ist ebenfalls aus der DE 10 2012 111 757 A1 bekannt. Andere beispiele für Messrohre finden sich in der US 4,195,515 A oder auch in der US 5,325,728 A.

Der Erfindung liegt die Aufgabe zugrunde, ein magnetisch-induktives Durchflussmessgerät anzugeben, das eine hohe Messgenauigkeit auch unter einer hohen Druckbelastung ermöglicht.

Das erfindungsgemäße magnetisch-induktive Durchflussmessgerät, bei dem die zuvor hergeleitete und aufgezeigte Aufgabe gelöst ist, ist zunächst und im Wesentlichen gekennzeichnet durch die Merkmale des Kennzeichnungsteils von Patentanspruch 1.

Ist bei magnetisch-induktiven Durchflussmessgeräten die Teilfläche relativ dünn ausgeführt, so kann ohne weitere Maßnahmen nicht verhindert werden, dass die Teilfläche - bei einem entsprechend hohen Druck in der Messleitung - nach außen ausbeult. Das würde die Lage und die Ausrichtung des auf der Teilfläche aufsitzenden Polschuhs ungewollt und unerwünscht verändern. Die vorhandenen Abstützrippen führen zu einer dem Ausbeulen entgegenwirkenden Stabilisierung oder Versteifung der Teilfläche.

Die Abstützrippen sind dabei insbesondere nur auf bzw. mit der Teilfläche fixiert.

Erfindungsgemäß besteht bei dem magnetisch-induktiven Durchflussmessgerät der Polschuh aus mehreren Polschuhteilen. Die Polschuhteile sind zwischen den Abstützrippen angeordnet, indem sich zwischen den Polschuhteilen Aussparungen für die Abstützrippen befinden. Die auf der Teilfläche vorgesehenen Abstützrippen verhindern nicht das bündige Anliegen der Polschuhteile auf der übrigen Teilfläche. Gleichzeitig stützen sich die Polschuhteile an den Abstützrippen ab.

Eine dabei besonders bevorzugte Ausführungsform weiter dadurch gekennzeichnet, dass die Polschuhteile über magnetisch gut leitende Polschuhstege mit dem Spulenkern verbunden sind. Vorzugsweise ist diese Ausführungsform ergänzend dadurch gekennzeichnet, dass die Polschuhteile, die Polschuhstege und der Spulenkern einstückig ausgeführt sind. Das hat dann den Vorteil, dass die von der Magnetspule erzeugte magnetische Durchflutung mit minimalem magnetischen Widerstand die Polschuhteile magnetisch beeinflusst, so dass bei durch die Magnetspule und durch die Bestromung der Magnetspule vorgegebener magnetischer Durchflutung ein relativ starkes Magnetfeld die Messleitung durchsetzen kann. Alternativ sind die Polschuhteile, die Polschuhstege und der Spulenkern zu Untergruppen gruppiert, die einstückig ausgeführt sind. So sind beispielsweise die Polschuhteile und die Polschuhstege einstückig ausgeführt und der Spulenkern ist ein separates Bauteil. Dies gilt entsprechend auch für andere Untergruppierungen.

Bei der zuletzt beschriebenen Ausführungsform, bei der die Polschuhteile, die Polschuhstege und der Spulenkern einstückig ausgeführt sind, empfiehlt es sich, die Gesamtheit aus Spulenkern, Spulenstegen und Polschuhteilen durch das MIM-Verfahren (MIM = Metal Inspection Molding) herzustellen. Sind nicht alle Elemente (also Polschuhteile, Polschuhstege und Spulenkern) einstückig ausgeführt, so sind in einer Ausgestaltung der Spulenkern und/oder die Polschuhstege und/oder die Polschuhteile durch das MIM-Verfahren hergestellt.

Eine Ausführungsform ist dadurch gekennzeichnet, dass die Polschuhteile im Wesentlichen in einer Ebene parallel zur Teilfläche angeordnet sind. In einer Variante liegen die Polschuhteile direkt auf der Teilfläche auf. Weiterhin befindet sich in einer Ausgestaltung der Spulenkern im Wesentlichen mittig innerhalb der Teilfläche. Weiterhin ist ein der Teilfläche zugewandtes Ende des Spulenkerns oberhalb der Polschuhteile und dadurch auch oberhalb der Teilfläche angeordnet. Sind in dieser Ausgestaltung insbesondere auch die Spulenstege vorhanden, so erstrecken sich diese von der Ebene der Polschuhteile hinauf zum - durch die Nähe zur Teilfläche bedingt - unteren Ende des Spulenkerns.

In einer Ausführungsform sind vier Polschuhteile vorhanden. In einer alternativen oder ergänzenden Ausgestaltung weisen die Polschuhteile jeweils eine im Wesentlichen rechteckige Außenkontur auf. Die vier Polschuhteile sind in einer Variante insbesondere derartig relativ zur Teilfläche angeordnet, dass sie wiederum insgesamt eine rechteckige Fläche überdecken.

In einer Ausgestaltung bilden die Abstützrippen auf der Teilfläche eine Kreuzform, wobei insbesondere in einer Variante der Überschneidungsbereich der Abstützrippen im Wesentlichen in der Mitte der Teilfläche liegt. In einer alternativen Ausgestaltung sind mindestens zwei Abstützrippen parallel zueinander angeordnet. In einer weiteren Ausgestaltung sind die Abstützrippen rautenförmig angeordnet.

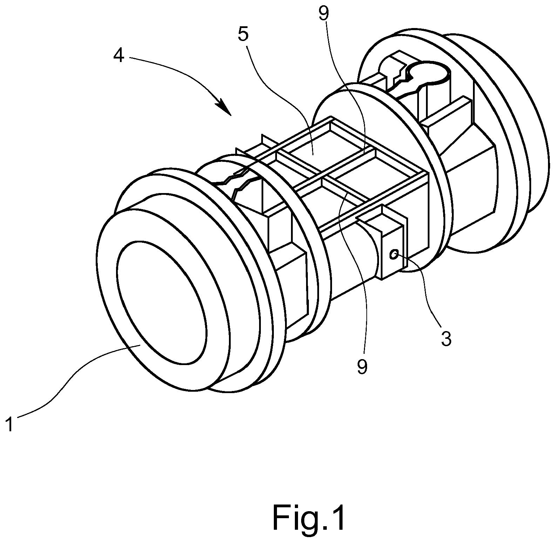

Wie zuvor im Einzelnen dargelegt, gibt es verschiedene Möglichkeiten, das erfindungsgemäße magnetisch-induktive Durchflussmessgerät auszugestalten und weiterzubilden. Dazu wird verwiesen auf die dem Patentanspruch 1 nachgeordneten Patentansprüche und auf die nachfolgende Beschreibung in Verbindung mit der Zeichnung. In der Zeichnung zeigen
- Fig. 1: eine perspektivische Darstellung einer zu einem magnetisch-induktiven Durchflussmessgerät gehörenden Messleitung,
- Fig. 2: eine erste Skizze zur Erläuterung eines bevorzugten Ausführungsbeispiels eines magnetisch-induktiven Durchflussmessgeräts und
- Fig. 3: eine zweite Skizze zur Erläuterung des Ausführungsbeispiels der Fig. 2.

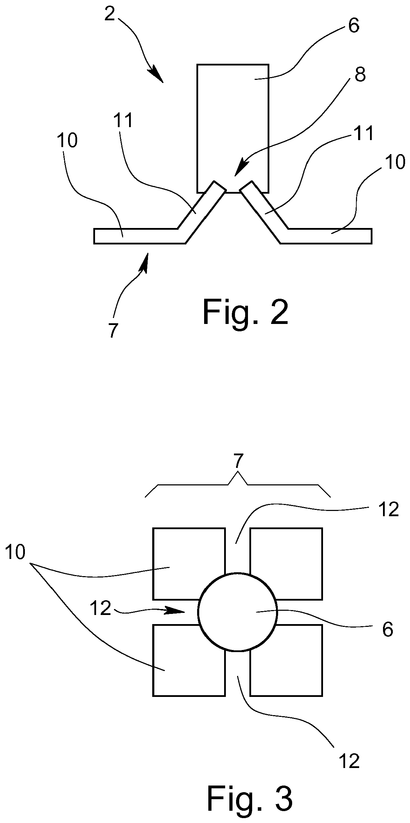

Zu magnetisch-induktiven Durchflussmessgeräten gehören eine Messleitung 1, durch die das Medium strömt, dessen Durchfluss gemessen werden soll, eine - hier in den Fig. 2 und 3 nur teilweise dargestellte - Magnetfelderzeugungseinrichtung 2 zur Erzeugung eines die Messleitung 1 wenigstens teilweise durchsetzenden Magnetfeldes und mindestens eine Messelektrode 3 zum Abgreifen einer in dem strömenden Medium induzierten Messspannung. In der Regel sind - hier nicht dargestellt - eine Auswerteeinheit und ein Messgerätgehäuse vorhanden.

Bei den erfindungsgemäßen magnetisch-induktiven Durchflussmessgeräten hat die Messleitung 1 einen mittleren, die Messelektroden 3 aufweisenden, einseitig abgeflachten Messabschnitt 4 mit einer ebenen Messleitungsfläche, nachfolgend immer Teilfläche 5 genannt. Zu der nur angedeuteten Magnetfelderzeugungseinrichtung 2 gehören eine nicht dargestellte Magnetspule, ein Spulenkern 6 und mindestens ein Polschuh 7. Im montierten Zustand befindet sich der Polschuh 7 mittig auf der Teilfläche 5 und dabei insbesondere oberhalb des Bereichs, in dem sich die beiden Abstützrippen 9 als Balken eines Kreuzes treffen.

Besteht die Messleitung 1 aus Kunststoff oder treten sehr hohe Drücke in der Messleitung auf, so muss unter Berücksichtigung des Drucks, der in der Messleitung 1 vorliegen kann, die Messleitung 1, auch im Messabschnitt 4, eine bestimmte Druckbeanspruchbarkeit haben. Deshalb haben die verschiedenen Bereiche der Messleitung 1 eine relativ große Dicke. Das gilt jedoch nicht, aus den weiter oben erläuterten Gründen, für die Teilfläche 5. Diese hat eine relativ geringe Dicke.

Für die Stabilität sind auf der Teilfläche 5 Abstützrippen 9 verwirklicht, die der Abstützung des Polschuhs 7 und der Verstärkung der Teilfläche 5 des Messabschnitts 4 der Messleitung 1 dienen. Bei den Abstützrippen 9 handelt es sich also um Abstütz- und Verstärkungsrippen, die hier kreuzförmig auf der Teilfläche 5 angeordnet sind. Der Überschneidungsbereich der Abstützrippen 9 befindet sich dabei unterhalb des Spulenkerns 6.

In dem dargestellten Ausführungsbeispiel besteht der Polschuh 7, wie die Fig. 2 und 3 zeigen, aus mehreren und insbesondere vier Polschuhteilen 10, die jeweils rechteckig ausgestaltet sind und durch ihre Anordnung relativ zur Teilfläche 5 ebenfalls ein Rechteck bilden, passend zu den Auflageflächen zwischen den Abstützungsrippen 9.

Dabei erlauben die Abstützrippen 9 das bündige Anliegen der Polschuhteile 10 auf der übrigen Teilfläche 5 durch die Anordnung des Polschuhs 7 zwischen den Abstützrippen 9, indem die Aussparungen 12 zwischen den Polschuhteilen 10 und die Abstützrippen 9 passend aufeinander abgestimmt sind.

Weiterhin sind die Polschuhteile 10 über magnetisch gut leitende Polschuhstege 11 mit dem der Teilfläche 5 zugewandten Ende 8 des Spulenkerns 6 verbunden. Daraus resultiert der Vorteil eines minimal möglichen magnetischen Widerstands, so dass bei durch die nicht dargestellte Magnetspule und durch die Bestromung der Magnetspule vorgegebener magnetischer Durchflutung ein relativ starkes Magnetfeld die Messleitung 1 durchsetzen kann.

## Patentansprüche

1. Magnetisch-induktives Durchflussmessgerät zur Durchflussmessung eines strömenden Mediums, mit einer Messleitung (1), mit einer Magnetfelderzeugungseinrichtung (2) zur Erzeugung eines die Messleitung (1) wenigstens teilweise durchsetzenden Magnetfeldes, mit mindestens einer Messelektrode (3) zum Abgreifen einer in dem strömenden Medium induzierten Messspannung, wobei die Messleitung (1) einen mittleren, die Messelektrode (3) aufweisenden, zumindest einseitig abgeflachten Messabschnitt (4) mit einer ebenen Messleitungsteilfläche, nachfolgend immer Teilfläche (5), aufweist, wobei zu der Magnetfelderzeugungseinrichtung (2) mindestens ein Spulenkern (6) und mindestens ein Polschuh (7) gehören und wobei auf der Teilfläche (5) mehrere Abstützrippen (9) realisiert sind,
**dadurch gekennzeichnet,**
**dass** der mindestens eine Polschuh (7) aus mehreren Polschuhteilen (10) besteht, wobei zwischen den Polschuhteilen (10) Aussparungen (12) für die Abstützrippen (9) vorhanden sind, so dass die Polschuhteile (10) bündig auf der übrigen Teilfläche (5) aufliegen und die Polschuhteile (10) sich gleichzeitig an den Abstützrippen (9) abstützen.

2. Magnetisch-induktives Durchflussmessgerät nach Anspruch 1, **dadurch gekennzeichnet, dass** die Polschuhteile (10) über magnetisch gut leitende Polschuhstege (11) mit dem Spulenkern (6) verbunden sind.

3. Magnetisch-induktives Durchflussmessgerät nach Anspruch 1 oder 2, **dadurch gekennzeichnet, dass** der Spulenkern (6) und/oder die Polschuhstege (11) und/oder die Polschuhteile (10) durch das MIM-Verfahren (MIM = Metal Injection Molding) hergestellt sind.

4. Magnetisch-induktives Durchflussmessgerät nach einem der Ansprüche 1 bis 3, **dadurch gekennzeichnet, dass** die Polschuhteile (10) im Wesentlichen in einer Ebene parallel zur Teilfläche (5) angeordnet sind, dass sich der Spulenkern (6) im Wesentlichen mittig innerhalb der Teilfläche (5) befindet und dass ein der Teilfläche (5) zugewandtes Ende (8) des Spulenkerns (6) oberhalb der Polschuhteile (10) angeordnet ist.

5. Magnetisch-induktives Durchflussmessgerät nach einem der Ansprüche 1 bis 4, **dadurch gekennzeichnet, dass** vier Polschuhteile (10) vorhanden sind.

6. Magnetisch-induktives Durchflussmessgerät nach einem der Ansprüche 1 bis 5, **dadurch gekennzeichnet, dass** die Polschuhteile (10) eine im Wesentlichen rechteckige Außenkontur aufweisen.

7. Magnetisch-induktives Durchflussmessgerät nach einem der Ansprüche 1 bis 6, **dadurch gekennzeichnet, dass** die Abstützrippen (9) kreuzförmig auf der Teilfläche (5) angeordnet sind.

## Claims

1. Magnetic-inductive flowmeter for measuring flow of a flowing medium, having a measuring tube (1), having a magnetic field generator (2) for generating a magnetic field at least partially permeating the measuring tube (1), having at least one measuring electrode (3) for tapping a measuring voltage induced in the flowing medium, wherein the measuring tube (1) has a central measuring section (4) including the measuring electrode (3) that is flat on one side having a planar measuring tube portion, called portion (5) in the following, wherein at least one coil core (6) and at least one pole shoe (7) belong to the magnetic field generator (2), and wherein several support ribs (9) are implemented on the portion (5),
**characterized in**
**that** the at least one pole shoe (7) consists of several pole shoe parts (10), wherein recesses (2) for the support ribs (9) are present between the pole shoe parts (10), so that the pole shoe parts lie flat against the remaining portion (5) and, at the same time, the pole shoe parts (10) are supported on the support ribs (9).

2. Magnetic-inductive flowmeter according to claim 1, **characterized in that** the pole shoe parts (10) are connected to the coil core (6) via pole shoe bridges (11) having good magnetic conductivity.

3. Magnetic-inductive flowmeter according to claim 1 or 2, **characterized in that** the coil core (6) and/or the pole shoe bridges (11) and/or the pole shoe parts (10) are produced using the MIM method (MIM = metal injection molding).

4. Magnetic-inductive flowmeter according to any one of claims 1 to 3, **characterized in that** the pole shoe parts (10) are arranged essentially in a plane parallel to the portion (5), that the coil core (6) is located essentially centrally inside the portion (5) and that one end (8) of the coil core (6) facing the portion (5) is arranged above the pole shoe parts (10).

5. Magnetic-inductive flowmeter according to any one of claims 1 to 4, **characterized in that** four pole shoe parts (10) are present.

6. Magnetic-inductive flowmeter according to any one of claims 1 to 5, **characterized in that** the pole shoe parts (10) have an essentially rectangular outer contour.

7. Magnetic-inductive flowmeter according to any one of claims 1 to 6, **characterized in that** the support ribs (9) are arranged in the shape of a cross on the portion (5).

## Revendications

1. Débitmètre magnéto-inductif destiné à mesurer le débit d'un fluide qui s'écoule, comprenant une conduite de mesure (1), comprenant un dispositif de génération de champ magnétique (2) destiné à générer un champ magnétique qui traverse au moins partiellement la conduite de mesure (1), comprenant au moins une électrode de mesure (3) destinée à prélever une tension de mesure induite dans le fluide qui s'écoule, la conduite de mesure (1) possédant une portion de mesure (4) centrale, qui possède l'électrode de mesure (4) et qui est aplatie d'au moins un côté, comprenant une surface partielle de conduite de mesure plane, ci-après toujours surface partielle (5), au moins un noyau de bobine (6) et au moins une pièce polaire (7) faisant partie du dispositif de génération de champ magnétique (2) et plusieurs nervures d'appui (9) étant réalisées sur la surface partielle (5),
**caractérisé en ce**
**que** l'au moins une pièce polaire (7) se compose de plusieurs parties de pièce polaire (10), des cavités (12) pour les nervures d'appui (9) se trouvant entre les parties de pièce polaire (10), de sorte que les parties de pièce polaire (10) reposent à fleur sur la surface partielle (5) restante et les parties de pièce polaire (10) prennent appui simultanément contre les nervures d'appui (9).

2. Débitmètre magnéto-inductif selon la revendication 1, **caractérisé en ce que** les parties de pièce polaire (10) sont reliées aux noyaux de bobine (6) par le biais d'éléments jointifs de pièce polaire (11) ayant une bonne conductivité magnétique.

3. Débitmètre magnéto-inductif selon la revendication 1 ou 2, **caractérisé en ce que** le noyau de bobine (6) et/ou les éléments jointifs de pièce polaire (11) et/ou les parties de pièce polaire (10) sont fabriqués par le procédé MIM (Métal Injection Molding - Moulage par injection de poudre).

4. Débitmètre magnéto-inductif selon l'une des revendications 1 à 3, **caractérisé en ce que** les parties de pièce polaire (10) sont disposées sensiblement dans un plan parallèle à la surface partielle (5), **en ce que** le noyau de bobine (6) se trouve sensiblement au centre à l'intérieur de la surface partielle (5) et **en ce qu'**une extrémité (8) du noyau de bobine (6) qui fait face à la surface partielle (5) est disposée au-dessus des parties de pièce polaire (10).

5. Débitmètre magnéto-inductif selon l'une des revendications 1 à 4, **caractérisé en ce que** quatre parties de pièce polaire (10) sont présentes.

6. Débitmètre magnéto-inductif selon l'une des revendications 1 à 5, **caractérisé en ce que** les parties de pièce polaire (10) possèdent un contour extérieur sensiblement rectangulaire.

7. Débitmètre magnéto-inductif selon l'une des revendications 1 à 6, **caractérisé en ce que** les nervures d'appui (9) sont disposées en forme de croix sur la surface partielle (5).
